## Europäisches Patentamt

## European Patent Office

## Office européen des brevets

(19)

(11) Numéro de publication : **0 254 920 B1**

(12)

# FASCICULE DE BREVET EUROPEEN

(45) Date de publication du fascicule du brevet :
11.09.91 Bulletin 91/37

(51) Int. Cl.⁵ : **H04Q 11/04**

(21) Numéro de dépôt : **87109799.4**

(22) Date de dépôt : **07.07.87**

(54) **Système de rattachement d'abonnés téléphoniques organisé autour d'un autocommutateur temporel numérique.**

(30) Priorité : 10.07.86 FR 8610094

(43) Date de publication de la demande :
03.02.88 Bulletin 88/05

(45) Mention de la délivrance du brevet :
11.09.91 Bulletin 91/37

(84) Etats contractants désignés :
AT BE CH DE ES FR GB GR IT LI LU NL SE

(56) Documents cités :
EP-A- 0 169 553
FR-A- 2 503 497
GB-A- 2 083 320
IEEE JOURNAL ON SELECTED AREAS IN
COMMUNICATIONS, vol. SAC-3, no. 4, juillet
1985, pages 561-568, IEEE, New York, US; A.L.
JACKSON et al.: "The Harris 20-20 integrated
network switch"

(56) Documents cités :
COMMUTATION & TRANSMISSION, vol. 5, no.
3, septembre 1983, pages 107-126, Issy-Les-
Moulineaux, FR; P. CHARRANSOL et al.:
"Présentation matérielle du MT 35: un système de commutation qui exploite les possibilités actuelles de la technologie"

(73) Titulaire : ALCATEL BUSINESS SYSTEMS
12, rue de la Baume
F-75008 Paris (FR)

(72) Inventeur : Baltz, Rainier
33 rue de la Liberté
F-67380 Lingolsheim (FR)
Inventeur : Fuhrer, Jean-Claude
27 rue Mozart Lipsheim
F-67640 Fegersheim (FR)

(74) Mandataire : Weinmiller, Jürgen et al
Lennéstrasse 9 Postfach 24
W-8133 Feldafing (DE)

EP 0 254 920 B1

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

La présente invention a pour objet un système de rattachement d'abonnés téléphoniques, notamment de type privé, organisé autour d'un autocommutateur temporel numérique. (c.f. par exemple document FR-A-2 503 497)

L'apparition d'un nombre croissant d'appareils de télécommunications susceptibles de se raccorder aux lignes d'un autocommutateur téléphonique en vue d'assurer la communication d'informations sous des formes très diversifiées mettant en jeu des procédures notablement différentes, implique la réalisation d'autocommutateurs de rattachement qui soient à la fois aisément adaptables aux besoins des utilisateurs tout en assurant une nécessaire uniformisation des informations en vue de leur commutation par le réseau de connexion de l'autocommutateur à travers lequel elles transitent et de leur éventuelle transmission par l'intermédiaire des réseaux de communication, notamment du réseau téléphonique public.

Ceci implique en premier lieu que les informations, transmises par les appareils de télécommunication des utilisateurs directement rattachés à un autocommutateur et par les réseaux de communication auxquels cet autocommutateur est relié, qui sont fournies sous des formes et avec des procédures spécifiquement adaptées à ces appareils ou à ces équipements, soient formatées au niveau des joncteurs, qui les reçoivent dans l'autocommutateur, pour se présenter sous une forme acceptable par le réseau de connexion de cet autocommutateur.

Ceci implique en second lieu que les signalisations reçues sous des formes éventuellement très diverses, des appareils et des réseaux de communication par les joncteurs de l'autocommutateur, en vue de leur prise en compte par ce dernier, soient également formatées au niveau de ces joncteurs de manière à pouvoir être aisément prises en compte par le système de commande interne dudit autocommutateur.

Une solution mise en oeuvre dans les grands autocommutateurs à système de commande comportant plusieurs processeurs consiste à affecter des processeurs aux différents joncteurs et à faire dialoguer les processeurs des joncteurs avec ceux du système de commande par l'intermédiaire d'un ou de plusieurs réseaux de liaison, internes à l'autocommutateur, où les informations s'échangent de manière standardisée propre à chaque réseau de liaison.

Une telle solution présente l'inconvénient d'être lourde et trop coûteuse pour les autocommutateurs de plus faible capacité, où le volume de trafic à écouler est moindre et ne justifie notamment pas l'emploi d'un nombre élevé de processeurs.

La présente invention propose donc un système de rattachement d'abonnés téléphoniques, notamment de typo privé, organisé autour d'un autocommutateur temporel numérique qui est commandé par un processeur central, qui est synchronisé par une horloge centrale, qui comporte un réseau de connexion composé par une matrice de commutation temporelle et qui comporte des joncteurs reliés d'une part au réseau de connexion par des liaisons multiplexes temporelles, d'autre part soit à des appareils de télécommunication, éventuellement divers, par lesquels les abonnés sont rattachés à l'autocommutateur, via des lignes appropriées, pour communiquer entre eux, soit encore à d'autres autocommutateurs, les joncteurs étant spécifiquement adaptés en fonction des appareils de télécommunication ou équipements d'autocommutateur auxquels ils sont reliés.

Selon une caractéristique de l'invention tous les différents joncteurs sont identiquement reliés au réseau de connexion, chacun disposant d'un même nombre de voies temporelles, sur l'une des liaisons multiplexes temporelles, par lesquelles transite l'intégralité des informations le concernant de manière que ces informations soient systématiquement commutées soit vers un autre joncteur, soit vers le processeur central, ce dernier disposant d'un accès direct à la mémoire de commutation dans laquelle il est susceptible de venir directement lire et écrire, ainsi que d'au moins un accès par un circuit émetteur-récepteur universel asynchrone relié comme un joncteur à une liaison multiplexe temporelle, via un circuit de liaison assurant bi-directionnellement la conversion et l'émission des signaux entre liaison multiplexe temporelle et circuit émetteur-récepteur universel asynchrone concernés.

L'invention, ses caractéristiques et ses avantages sont précisés dans la description qui suit en liaison avec les figures répertoriées ci-dessous.

La figure 1 présente le schéma d'un système de rattachement selon l'invention.

La figure 2 présente un exemple de joncteur pour appareils de télécommunication du type poste téléphonique.

La figure 3 présente sous forme de diagramme la constitution des octets de voies temporelles pour un joncteur tel que proposé en figure 2.

La figure 4 présente un autre exemple de joncteur pour postes à deux lignes.

La figure 5 présente sous forme de diagramme la constitution des octets des voies temporelles pour un joncteur tel que présenté figure 4.

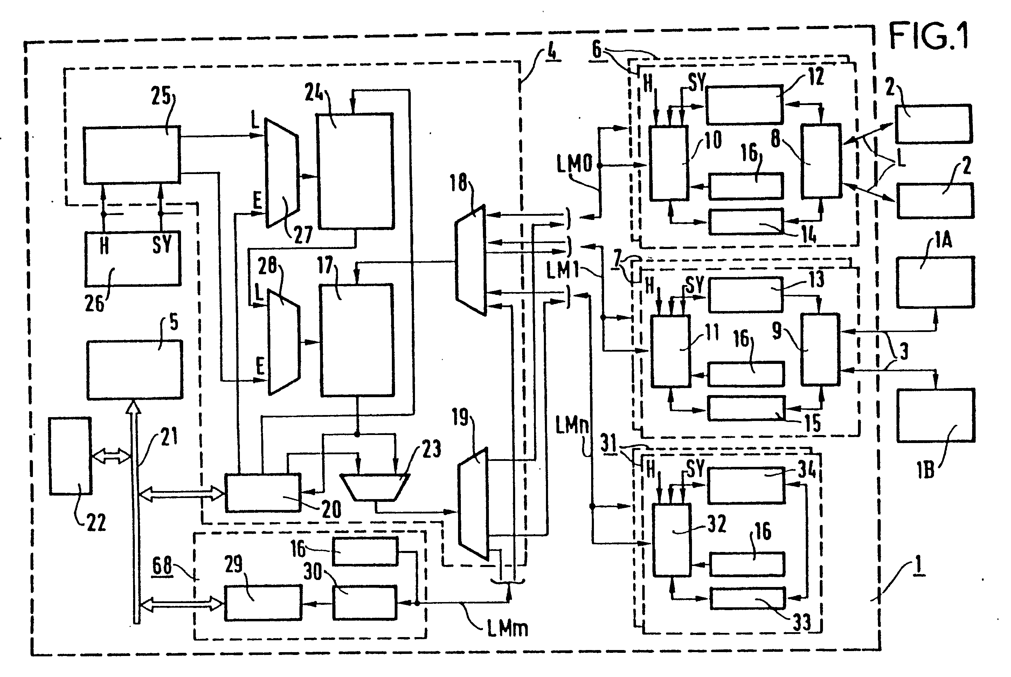

Le système temporel numérique de rattachement d'abonnés téléphoniques présenté figure 1 est destiné à permettre le raccordement d'appareils de télécommunication 2 divers en vue de leur mise en communication avec des appareils identiques ou compatibles par l'intermédiaire d'un autocommutateur de rattachement 1, éventuellement via des liaisons téléphoniques 3 reliant cet autocommutateur de rattachement à d'autres autocommutateurs 1A, 1B d'un même réseau de communication.

L'autocommutateur 1 est un autocommutateur à réseau de connexion temporel numérique 4, il est placé sous le contrôle d'un processeur central 5, chargé notamment de l'établissement des communications entre appareils de télécommunication 1 par l'intermédiaire du réseau de connexion 4.

Comme indiqué plus haut, les appareils de télécommunication 2 sont susceptibles d'être très différents, ils ont pour caractéristique commune d'être prévus pour permettre l'échange de signaux correspondants à des paroles ou à des données avec des appareils identiques ou compatibles par l'intermédiaire d'un réseau de commutation de type téléphonique.

Les appareils de télécommunications 2 sont par exemple de simples postes téléphoniques, des interphones, des postes d'intercommunications, ou des répondeurs prévus pour permettre des communications vocales entre abonnés d'un même réseau de communication téléphonique.

Les appareils de télécommunication 2 sont aussi par exemple des terminaux informatiques ou des modems raccordables à des lignes téléphoniques à des fins de transmission de données, via l'autocommutateur 1.

Les appareils de télécommunications 2 sont encore par exemple des télécopieurs ou des terminaux susceptibles d'émettre et de recevoir tant des signaux de parole que des signaux de données, tels certains terminaux, dits d'annuaire ou certains postes téléphoniques perfectionnés, étant entendu qu'un même central de rattachement est susceptible de desservir simultanément des appareils de télécommunication 2 différents reliés à lui par l'intermédiaire de lignes ici globalement référencées L.

De manière classique, l'autocommutateur 1 est susceptible d'être relié à d'autres autocommutateurs, tels 1A et 1B, par des liaisons filaires ou hertziennes téléphoniques 3 dont les plus classiques sont les lignes réseaux analogiques, les liaisons numériques de type MIL ou RNIS, les lignes spécialisées automatiques.

A cet effet l'autocommutateur 1 comporte des joncteurs spécialisés chargés de raccorder les lignes L des appareils de télécommunications 2 ou les liaisons téléphoniques 3 à son propre réseau de connexion 4.

Sur le schéma présenté figure 1, les joncteurs spécialisés assurant l'interface avec les appareils de télécommunications 2 ont été référencés 6 alors que ceux qui assurent l'interface avec les liaisons téléphoniques 3 ont été référencés 7.

Chaque joncteur spécialisé 6 ou 7 comporte essentiellement une interface de rattachement 8 ou 9 respectivement reliée à une ou plusieurs appareils de télécommunications 2 ou à une ou plusieurs liaisons téléphoniques 3, les appareils ou les liaisons reliées à une même interface étant identiques ou compatibles entre eux.

Chacune des interfaces de rattachement 8 ou 9 est respectivement reliée, dans le joncteur spécialisé qui la comporte, à une interface d'accès 10 ou 11 au réseau de connexion 4 par l'intermédiaire d'un agencement d'adaptation 12 ou 13 pour les signaux de paroles ou de données et d'un agencement collecteur de signalisation 14 ou 15. Un agencement d'identification 16 est également prévu dans chaque joncteur 6 ou 7 pour permettre sa reconnaissance pour le processeur central 5, la structure et les fonctions des interfaces de rattachement et des agencements d'adaptation, de signalisation et d'identification seront précisés ultérieurement au cours de la présente description.

Les interfaces d'accès 10 ou 11 des joncteurs spécialisés sont reliés au réseau de commutation 4 par l'intermédiaire de liaisons multiplex temporelles bidirectionnelles LM, telles LMO, LM1, LMn, LMm sur la figure 1. Chacune de ces liaisons multiplex temporelles LM est par exemple une liaison à 2048 Kbit/s permettant d'acheminer trente deux voies téléphoniques par paire de fils sur une liaison bidirectionnelle à deux paires de fils.

Dans l'exemple de réalisation proposé, chaque liaison multiplex temporelle LM dessert quatre joncteurs 6 ou 7 qui se partagent également les trente deux voies temporelles.

La répartition des voies temporelles est par exemple fonction de la position géographique de chaque joncteur par rapport aux trois autres joncteurs avec lesquels il partage une liaison multiplex temporelle LM dans l'unité de montage qui les comporte : en l'occurence, c'est le positionnement individuel de chacun des quatre connecteurs prévus en fond de panier pour relier quatre joncteurs à une même liaison multiplex temporelle LM, qui détermine l'attribution des voies temporelles à chacun des joncteurs, lesdits connecteurs étant choisis tous identiques pour la connexion des joncteurs aux liaisons multiplex temporelles LM, malgré les différences existant entre joncteurs.

Chaque liaison multiplex temporelle LM est chargée de transmettre toutes les informations commutées ou à commuter par le réseau de connexion 4 et toute la signalisation associée à ces informations pour chacun des joncteurs 6 ou 7 qu'elle dessert, lesdites informations et ladite signalisation se partageant les voies temporelles affectées au joncteur considéré dans chaque sens de transmission.

Le réseau de connexion 4 est constitué par une ou plusieurs matrice de commutation auxquelles aboutissent les liaisons multiplexes temporelles LMO à LMn.

Dans l'exemple de réalisation proposé, le réseau de connexion 4 est constituée par une matrice de type 8 x 8 permettant de commuter les voies temporelles de huit liaisons multiplexes temporelles bidirectionnelles LM, telle la matrice référencée MO88 de la société SGS.

De manière connue de telles matrices comportent une mémoire de commutation 17, souvent appelée mémoire de parole, cette mémoire reçoit les octets successivement fournis par les liaisons multiplexes temporelles LM, via un multiplexeur d'entrée 18, pour chacune des différentes voies temporelles que ces liaisons comportent dans un premier sens, dit entrant.

Les différents octets reçus sont réémis par la mémoire de commutation 17, dans un ordre déterminé et via un démultiplexeur de sortie 19, sur les voies temporelles de second sens, dit sortant, des liaisons multiplexes LM à destination des joncteurs 6 ou 8 chargés de les transmettre plus avant.

La sortie d'octets de la mémoire de commutation 17 est reliée en parallèle en entrée du démultiplexeur de sortie 19 et en entrée d'un interface d'échange 20 permettant notamment au processeur central 5 de lire les octets apparaissant en sortie de mémoire de commutation 17.

L'interface d'échange 20 est reliée au bus 21 d'entrée/sortie du processeur central 5, qui relie également ce processeur à son ensemble usuel de mémoires vives et mortes 22.

L'interface d'échange 20 est également reliée à une entrée d'un multiplexeur 23 à deux entrées, inséré entre l'entrée du démultiplexeur 19 et la sortie de la mémoire de commutation 17 à laquelle il est reliée par sa seconde entrée. La liaison ainsi établie entre le processeur central 5 et le multiplexeur 23 permet au processeur central 5 de substituer un octet défini selon ses besoins à un octet issu de la mémoire de commutation dans une voie temporelle sortante quelconque de n'importe laquelle des liaisons multiplexes LM.

De manière classique, la mémoire de commutation 17 est placée sous le contrôle d'une mémoire de commande 24 et d'une base de temps 25 qui se répartissent la commande des écritures et des lectures d'octets dans cette mémoire de commutation.

La base de temps 25 reçoit un signal d'horloge H et un signal de synchronisation SY d'une horloge centrale 26 de l'autocommutateur qui est extérieure au réseau de connexion 4.

En choisissant une fréquence d'horloge supérieure aux besoins pour la lecture et l'écriture des octets en mémoire de commutation 17 il est possible de disposer de temps d'horloge supplémentaires, permettant la réalisation d'opérations antérieurement non prévues.

Ainsi la multiplication de la fréquence d'horloge par un facteur deux ou multiple, pour les opérations d'écriture et lecture en mémoire de commutation 17 permet de disposer de temps pour la lecture directe par le processeur central 5 des octets mis en mémoire, sans perturbation des phases de lecture des octets envoyés sur les voies temporelles sortantes des liaisons multiplexes temporelles LM.

La mémoire de commande 24 est classiquement adressée en écriture par le processeur central 5 via l'interface d'échange 20 et un premier sélecteur d'adressage 27 et en lecture par la base de temps 25, via ce premier sélecteur d'adressage. La mémoire de commutation 17 est adressée par la mémoire de commande 24 ou par la base de temps 25, via un second sélecteur d'adressage 28, pour ses opérations de lecture et d'écriture.

Dans la réalisation proposée, le processeur central 5 dispose d'au moins d'un équipement périphérique 68 comportant un circuit émetteur-récepteur universel asynchrone 29, de type UART ou USART, destiné à émettre ou recevoir, pour le processeur central 5 et sous forme numérique, au moins certaines informations à destination ou en provenance des joncteurs 6 ou 7.

En ce but l'équipement périphérique 68 ou plus précisément chaque circuit émetteur-récepteur asynchrone 29 est relié d'une part au bus d'entrée-sortie 21 du processeur central 5 d'autre part à une liaison multiplex temporelle LM, telle LMm, lui donnant accès au réseau de connexion 4, via un circuit individuel de liaison 30. Chaque circuit de liaison 30 assure la mise sous forme d'octets compatibles MIC des données émises sous forme série par le circuit émetteur-récepteur asynchrone 29 associé, en vue de l'émission de ces octets sur une voie temporelle entrante de la liaison multiplexe temporelle LM, à destination d'un joncteur via le réseau de connexion 4. Chaque circuit de liaison 30 assure également la transmission en série vers le circuit émetteur-récepteur asynchrone 29 associé des bits contenus dans les octets reçus d'un joncteur via une voie temporelle entrante de la liaison multiplexe temporelle qui le dessert, le réseau de connexion 4 et une voie temporelle sortante de la liaison multiplexe temporelle LMm.

Un agencement d'identification 16 associé au circuit de liaison 30 permet la reconnaissance de l'équipement périphérique 68 qui le comporte.

Dans l'exemple de réalisation présenté, une liaison multiplex temporelle LMn permet aussi de relier des équipements auxiliaires 31 de l'autocommutateur 1 au réseau de commutation 4 de cet autocommutateur, par exemple pour des besoins de traitement des signalisations multifréquences éventuellement reçues de certains joncteurs. Chaque équipement auxiliaire 31, qui se raccorde préférablement à la jonction multiplexe temporelle LMn comme un joncteur 6 ou 7, est dotée en ce but d'une interface d'accès 32, semblable aux interfaces d'accès 10 et 11, qui sera précisée plus loin avec ces dernières.

L'interface d'accès 32 est reliée d'une part à un agencement de signalisation 33 destiné à recevoir et émettre les signalisations en provenance ou à destination de l'autocommutateur 1 et d'autre part à un agencement de traitement 34 apte à convertir les informations reçues en informations exploitables par l'autocommutateur, si besoin est, ces informations reçues étant par exemple des informations de numérotation transmises codées sous forme multifréquence.

Les auxiliaires 31 comportent chacun un agencement d'identification 16 leur permettant de se faire reconnaître par le processeur central 5 de même que le font les joncteurs 6 ou 7.

Dans l'exemple présenté où l'auxiliaire est un équipement de signalisation multifréquence, l'agencement de traitement 34 est bien entendu en liaison avec l'agengement de signalisation 33 pour les besoins de sa fonction.

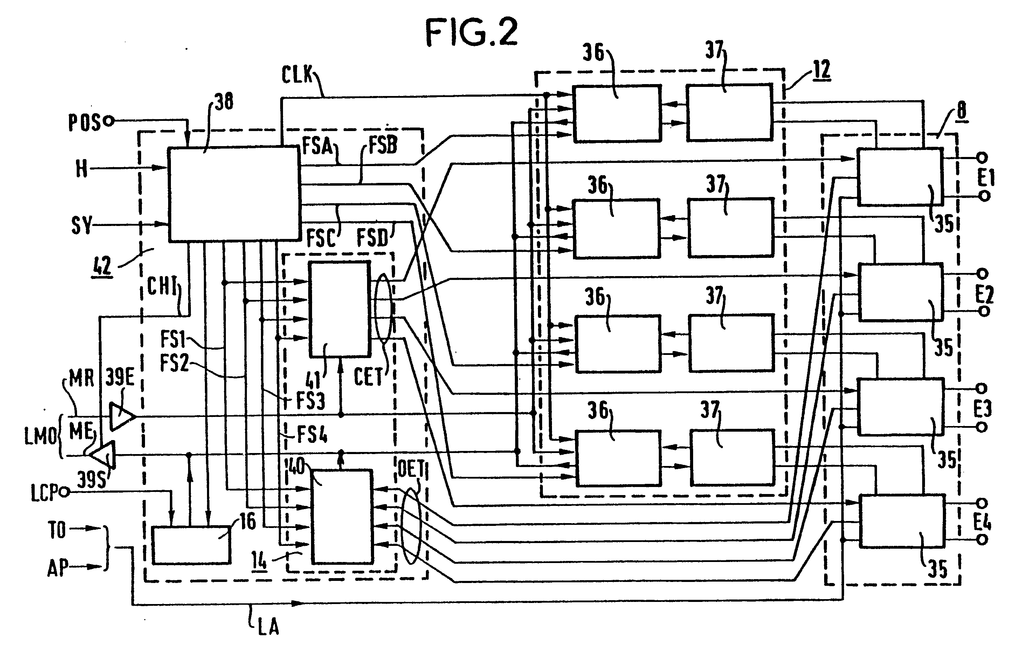

Le joncteur spécialisé présenté figure 2 est destiné à desservir des postes téléphoniques usuels non représentés, ici prévus au nombre de quatre, venant individuellement se connecter par leur fils de ligne aux bornes référencées globalement E1, E2, E3, E4 de quatre classiques circuits de ligne d'abonné 35 qui constituent dans ce cas l'interface de raccordement 8 du joncteur considéré.

Chaque circuit de ligne d'abonné 35 est relié à un codeur-décodeur MIC, dit codec, 36, via un circuit de passage deux fils/quatre fils 37, de manière à permettre le codage sous forme d'échantillon MIC des signaux analogiques qu'il reçoit du poste téléphonique qu'il dessert et la mise sous forme analogique des signaux de parole constitués par une succession d'échantilon MIC régulièrement espacés qui lui sont destinés.

Quatre codecs 36 et les quatre circuits de passage deux fils/quatre fils 37 qui leurs sont individuellement associés forment ici l'agencement d'adaptation 12 du joncteur considéré.

Les quatre codecs 36 du joncteur, qui sont préférablement du type cofidec associant un filtre au codeur-décodeur proprement dit, sont reliés en parallèle à une liaison multiplex temporelle bidirectionnelle, telle LMO, ou plus précisément à chacune des deux liaisons multiplexes temporelles unidirectionnelles d'émission ME et de réception MR de sens inverse de cette liaison LMO.

L'émission d'échantillons MIC par les codecs 36 pendant les intervalles de temps de voie réservés au joncteur au cours des trames sur la liaison multiplex temporelle unidirectionnelle ME est contrôlée par un circuit d'horloge 38 recevant des signaux d'horloge H et de synchronisation SY de l'horloge 26 de l'autocommutateur 1, ainsi que des indications POS ici constituée d'un mot de deux bits lui permettant de déterminer les positions des intervalles de temps de voie affectées au joncteur qui le comporte.

Comme il a été indiqué plus haut, c'est le position géographique du joncteur par rapport aux trois autres joncteurs avec lesquels il partage une liaison multiplex temporelle, telle LMO, qui définit la position des huit intervalles de temps qui lui sont attribués dans chaque sens de transmission au cours des trames successives. Cette position est par exemple fournie sous forme de deux bits et par câblage dans le connecteur de raccordement non figuré du joncteur à la liaison multiplex temporelles dont le câblage court par exemple en fond de panier.

Le circuit d'horloge 38 qui se présente usuellement comme un compteur ne sera pas décrit plus avant dans la mesure où il est de structure connue de l'homme de l'art.

Ce circuit d'horloge 38 commande par une liaison CHI un amplificateur de sortie 39S reliant les codecs 36 à la liaison d'émission DX sur laquelle ils envoient les échantillons MIC, de manière que le joncteur présente un état haute impédance, au niveau de sa jonction à ladite liaison ME pendant les intervalles de temps de trame réservés aux émissions des autres joncteurs sur cette liaison.

Le circuit d'horloge 38 fournit classiquement aux quatre codecs 36 placés sous son contrôle d'une part les signaux d'horloge CLK de fréquence d'échantillonnage 8 KHz, d'autre part des signaux individuels d'activations FSA, FSB, FSC et FSD pour l'intervalle de temps de trame affecté à chacun d'entre eux.

Le circuit d'horloge 38 fournit spécifiquement des indications de temps permettant d'une part l'envoi cyclique d'une information d'identification du joncteur qui le comporte à chaque émission de ce dernier sur la liaison d'émission ME au cours des différentes trames, d'autre part l'envoi des informations de signalisation par l'agencement collecteur de signalisation 14 de ce joncteur.

Les informations d'identification sont fournies par l'agencement d'identification 16 du joncteur qui est commandé par le circuit d'horloge 38 et qui attaque la liaison d'émission ME en amont de l'amplificateur de sortie 39S en parallèle avec les codecs 36.

Ces informations d'identification sont fournies sous forme codée par exemple dans le cadre d'un octet référencé "Icp" émis au cours du dernier des huit intervalles de temps réservés à chacun des quatre joncteurs au cours de chaque trame sur la liaison d'émission ME.

Dans une forme préférée de réalisation l'octet "Icp" contenudans le dernier des huit intervalles de temps réservés à un joncteur 6, 7, un équipement auxiliaire 31, ou un équipement périphérique 68 au cours d'une trame est systématiquement un octet d'identification.

Les différents types de joncteur, d'équipements auxiliaires ou périphériques correspondent chacun à un octet d'identification "Icp" différent qui tient compte de leur type et de leur niveau d'équipement pour ceux d'entre eux qui sont susceptible de desservir un nombre variable de terminaux 2, cette information étant introduite dans le joncteur avec éventuellement d'autres par un logique d'identification par exemple câblée, non représentée, via un ensemble de liaisons référencé LCP.

De même un octet d'identification, ne comportant par exemple que des bits de même valeur, est généré par câblage pour les positions de joncteur inoccupées sur les liaisons d'émission ME.

Comme indiqué plus haut en liaison avec la figure 1, chaque joncteur 6 ou 7 comporte un agencement collecteur de signalisation 14 ou 15 assurant la transmission bidirectionnelle des signalisations, après adaptation éventuelle, entre les interfaces de rattachement 8 ou 9 et le processeur central 5, via le réseau de commutation 4 et à des fins d'exploitation par l'autocommutateur 1, c'est-à-dire entre les circuits de ligne d'abonné 35 et le processeur central 5, via le réseau de connexion 4, dans le cas du joncteur présenté figure 2.

En ce but l'agencement collecteur de signalisation 14 de ce joncteur comporte une unité collectrice d'entrée 40 de type multiplexeur recevant, via des liaisons spécifiques OET, les signalisations fournie ici sous forme de changements d'états par les postes téléphoniques reliés aux bornes E1 à E4 des circuits de ligne d'abonné 35 et traduisant ces changements d'états sous forme de données binaires transmissibles sur les voies temporelles de la liaison d'émission ME à laquelle ladite unité collectrice d'entrée est reliée.

L'agencement collecteur de signalisation 14 comporte également une unité collectrice de sortie 41 de type démultiplexeur, reliée à la liaison de réception MR en aval d'un amplificateur d'entrée 39E pour recevoir les signalisations émises sous forme numérique par le processeur central 5, via le réseau de connexion 4.

L'activation en émission de l'unité collectrice d'entrée 40 et en réception de l'unité collectrice de sortie 41 est simultanément assurée par le circuit d'horloge 38 qui fournit en ce but des signaux d'activation FS1 à FS4 pendant les intervalles de temps de trame concernés et des signaux d'horloge d'émission et de réception de bits par des liaisons non représentées ici.

L'unité collectrice de sortie 41 transforme de manière connue en soi, les informations numériques de signalisation reçues du processeur central 5 en état qui sont transmis vers les circuits de ligne d'abonné 35 par les liaisons spécifiques globalement référencées CET.

Dans une forme préférée de réalisation, le circuit d'horloge 38 l'agencement collecteur de signalisation 14 et l'agencement d'identification 16 sont intégrés en un même circuit dit de terminaux analogiques 42.

En ce dernier lieu dans l'exemple de réalisation proposé en liaison avec la figure 2, les circuits de ligne d'abonné 35 reçoivent constamment et via un ensemble de liaisons de distribution LD, divers signaux auxiliaires tels que les signaux alternatifs de sonnerie AP ou des tonalités TO qu'ils sont susceptibles de transmettre sur commande vers les postes téléphoniques qu'ils desservent.

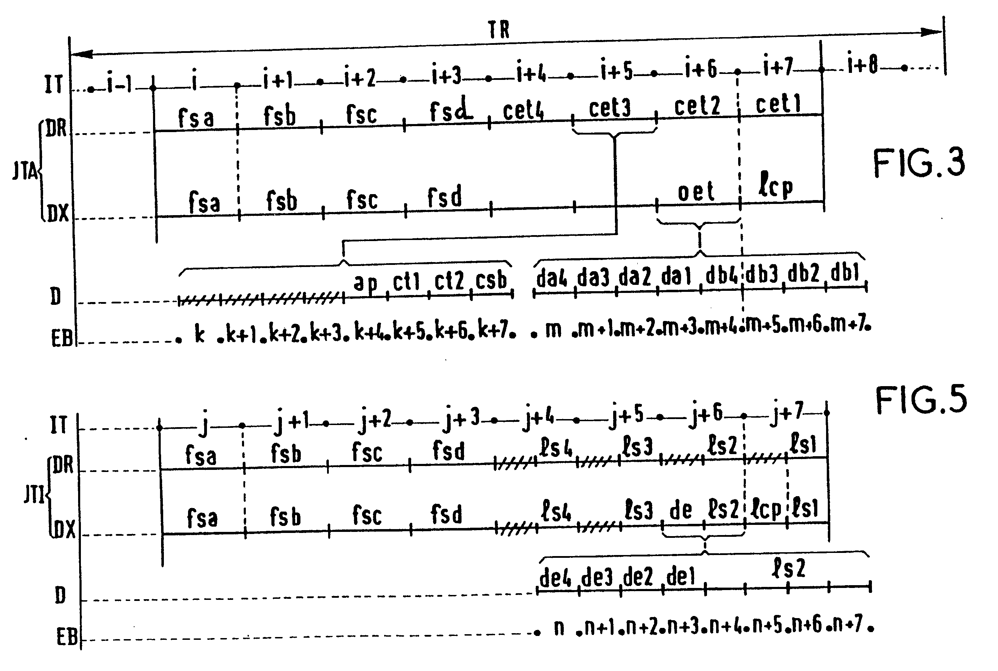

Le fonctionnement du joncteur, proposé en figure 2, en liaison avec les autres parties de l'autocommutateur présentées en figure 1 est défini ci-dessous en liaison avec le diagramme de la figure 3.

Comme indiqué plus haut ledit joncteur, spécialisé dans la desserte des postes téléphoniques analogiqes, dispose de huit voies temporelles dans chacun des deux sens de transmission de la liaison multiplexe temporelle, ici LMO, aux fils de laquelle est relié le connecteur non figuré auquel il est raccordé. Sachant qu'une même horloge définit les intervalles de temps de voie pour chaque sens de transmission, on s'arrange selon un processus usuel pour que les voies temporelles de même rang, correspondant donc à un même intervalle de temps de trame dans les deux sens de transmission sur la liaison multiplexe temporelle, soient affectées au même joncteur, telles les voies temporelles correspondent aux intervalles de temps référencés "i" à "i+7" pour une trame à trente deux intervalles de temps de voie en figure 3, sur les liaisons MR et ME de sens inverse de la liaison multiplexe temporelle LMO.

Dans l'exemple de réalisation proposé, chacun des intervalles de temps référencés "i" à "i+3" correspond à deux voies temporelles transmettant, l'une dans un sens sur la liaison d'émission ME et l'autre dans l'autre sens sur la liaison de réception MR, des informations échangées entre un des postes reliés par ses fils de ligne au joncteur et un autre poste auquel il est relié via ledit joncteur et le réseau de commutation 4.

La répartition des voies temporelles, référencées fsa, fsb, fsc ou fsd, aux postes reliés à un joncteur est préférablement géographique et dépend donc de la position respective des bornes E1, E2, E3 ou E4 auxquelles les fils de ligne du poste considéré sont reliés.

Comme indiqué plus haut c'est le circuit d'horloge 38 du joncteur qui active successivement les codecs 36 de manière à leur faire émettre chacun un octet correspondant à un échantillon du signal analogique qu'il reçoive d'un poste, via le circuit de ligne d'abonné 35 et le circuit de passage deux-fils/quatre-fils qui le desservent, et à leur faire récupérer chacun un échantillon reçu via la liaison de réception MR au cours de l'intervalle qui leur est individuellement affecté à chaque trame et que leur indique successivement le circuit d'horloge par des signaux d'activation individuels FSA à FSD transmis sur les liaisons portant aussi ces références en figure 2 et correspondant aux voies temporelles fsa à fsd.

Dans l'exemple de réalisation proposé, chacun des intervalles de temps référencés "i+4" à "i+7", dans le cas du joncteur présenté en figure 2, sont affectés sur la liaison de réception MR, à la transmission de commandes d'état "cet1" à "cet4" au profit des quatre postes reliés aux circuits de lignes d'abonné 35 du joncteur.

Dans le cas de postes téléphoniques analogiques, ces commandes d'état sont simples et peu nombreuses et comprennent par exemple une commande "ap" d'envoi de sonnerie, deux commandes "ct1" et "ct2" d'envoi de tonalités et une commande "csb" de mise en attente qui se traduisent ici chacune par un élément binaire. Ces commandes "ap, ct1, ct2 et csb" sont regroupées en un demi-octet qui est émis à chaque trame dans une voie temporelle de la liaison de réception MR affectée au poste concerné telle la voie temporelle référencée "cet3" de la liaison de réception MR qui correspond à l'intervalle de temps "i+5" et qui est affectée ici au troisième poste ou plus précisément au troisième circuit d'abonné 35 du joncteur 6 ici pris en compte sur les figures 1 à 3.

Dans l'exemple choisi, le demi-octet de commande d'état occupe les quatre positions successives d'éléments binaires "k+4" à "k+7", les quatre positions "k" à "k+3" de l'octet étant remplies de manière non significative.

De tels octets "cet1 à cet4" correspondants aux quatre voies temporelles de rang "i+4" à "i+7" dans la trame sont reçus par l'unité collectrice d'entrée 40 du joncteur activée successivement par des signaux FS1 à FS4 du circuit d'horloge 40 qui sont transmis par les liaisons portant ces mêmes références vers cette unité collectrice. Cette dernière transmet alors par chargement d'état sur les liaisons CET qui la relie aux circuits de ligne d'abonné 35 d'un joncteur toute commande concernant les postes qu'individuellement ces circuits desservent.

En sens inverse et toujours dans le cas du joncteur présenté figure 2, les intervalles de temps référencés "i+6" et "i+7" sont affectés, sur la liaison d'émission ME, à la transmission d'un octet d'observation d'état "oet" du joncteur et plus précisément des quatre postes reliés aux bornes de ces circuits de ligne d'abonnés 35 ainsi qu'à la transmission de l'octet "Icp" d'identification du joncteur et de son niveau d'équipement.

Dans l'exemple choisi, l'octet d'observation d'état "oet" regroupe dans ses huit éléments binaires "m" à "m+7" quatre observations da1 à da4 relatives à la position du bouton de mise à la terre prévu sur chacun des quatre postes reliés au joncteur considéré et quatre observations db1 à db4 relatives à l'état de boucle de chacun de ces quatre postes. En ce but le circuit de ligne d'abonné 35 surveille de manière classique tout changement d'état de boucle ou d'état de mise à la terre du poste relié à ses bornes et indique l'apparition d'un tel changement via les liaisons OET à l'unité collectrice de sortie 40 du joncteur qui le comporte. Ce dernier modifie la valeur binaire du bit d'observation correspondant dans l'octet d'observation "oet" qu'il émet au cours de la trame suivante sur la liaison d'émission ME.

Comme indiqué plus haut c'est l'agencement d'identification 16 activé par le circuit d'horloge 38 qui génère l'octet d'identification "Icp", ledit agencement d'identification 16 pouvant éventuellement agir en coopération avec l'unité collectrice de sortie 40, selon une éventuelle variante de réalisation.

Pratiquement le décrochage en appel d'un poste téléphonique analogique se traduit au niveau du joncteur 6 qui le dessert par modification de la valeur binaire du bit d'observation de boucle "db", par exemple "db2", dans l'octet produit par ce joncteur 6 au cours de la trame qui suit la fermeture de boucle de ligne causée par le décrochage.

L'octet "oet" transmis par la liaison d'émission ME de la liaison multiplexe temporelle LMO est alors écrit en mémoire de commutation 17 du réseau de commutation 4 (figure 1) à l'adresse où se succèdent les octets "oet" successivement générés par le joncteur 6 considéré au cours des trames successives. Comme indiqué, la fréquence d'horloge choisie permet au processeur central 5 de lire la mémoire de commutation 17 à l'adresse où viennent successivement se remplacer l'un après l'autre les octets "oet" émis au cours des trames successives par le joncteur 6 considéré, chaque octet étant transmis en parallèle au processeur central 5 via l'interface 20 et le bus 21 à des fins d'analyse.

Chaque analyse permet de superviser simultanément les quatre postes rattachés au joncteur considéré.

L'envoi de la tonalité d'invitation à numéroter vers le poste s'étant porté appelant par décrochage de son combiné, s'effectue en modifiant la valeur binaire de la commande d'envoi de tonalité par exemple "ct1" de l'octet émis, au cours de la trame qui suit dans la voie temporelle par exemple "cet2" servant à l'envoi de signalisation vers le circuit de ligne d'abonné desservant le poste appelant pour le joncteur considéré. La modification de la valeur binaire des commandes d'envoi de tonalités est effectuée par le processeur 5, via l'interface 20, il inscrit l'octet approprié dans la mémoire de commutation 17 à l'adresse permettant l'envoi ultérieur de cet octet sur la liaison multiplexe temporelle LMO, ou plus précisément sur sa liaison de réception MR, au cours de l'intervalle de temps "i+6" suivant sous l'action de la mémoire de commande 24.

La réception de la commande d'envoi de tonalité "ct1" dans la voie temporelle "cet2" concernée s'effectue au niveau de l'unité collectrice de sortie 41 du joncteur 6 concerné ; cette unité est activée durant l'intervalle de temps "i+6", elle entraîne l'envoi d'un ordre au circuit de ligne d'abonné 35 concerné, via l'une des liaisons CET. Le circuit de ligne alimente le poste relié à ses bornes E2 en signaux analogiques de tonalité TO, via la liaison LD concernée et par l'intermédiaire d'un commutateur non représenté.

C'est par l'intermédiaire de l'octet d'identification "lcp" que chaque joncteur 6 signal au processeur 5 le type de numérotation employée par les appareils 2 et en particulier les postes téléphoniques reliés à lui.

Dans le cas d'une numérotation par ouverture de boucle à partir d'un poste téléphonique c'est par l'intermédiaire du bit d'observation de boucle "db", tel "db2", affecté au circuit de ligne d'abonné concerné que le processeur 5 reçoit, via la mémoire de commutation 17, les indications successives d'ouverture et de fermeture de boucle correspondant à la numérotation produite. Ces indications par changement de valeur binaire d'un bit donné d'observation de boucle au cours des trames successives, sont récupérées au fur et à mesure par le processeur central 5 qui en tire les conséquences nécessaires pour l'établissement d'un chemin à travers le réseau de commutation 4 entre le poste appelant et le correspondant qu'il appelle pour leur mise en communication bidirectionnelle.

Ceci conduit à mémoriser deux adresses en mémoire de commande 24 l'une concernant l'adresse où s'inscrivent en mémoire de commutation 17 au cours des trames successives les octets d'informations commutées - échantillons de parole ou données mises sous forme analogique et codées -émis par le poste et l'autre celle où s'inscrivent en cette même mémoire de commutation les octets d'informations commutées émis par le correspondant, les unes et les autres de ces informations transitant par l'agencement d'adaptation 12 du joncteur 6 (figure 1).

Dans le cas d'une numérotation en code multifréquence à partir d'un poste, cette particularité est fournie au processeur central 5.

A reconnaissance d'un appel par un tel poste, le processeur 5 établit un chemin à travers le réseau de commutation 4 entre le circuit de ligne d'abonné 35 auquel est relié le poste dans le joncteur 6 et un récepteur de signalisation multifréquence placé en position d'équipement auxiliaire 31 dans l'autocommutateur 1.

Dans un exemple de réalisation chaque récepteur multifréquence est composé de quatre unités identiques non représentées ayant la structure générale définie pour l'équipement auxiliaire 31 présenté figure 1 et il est susceptible de se substituer à un joncteur dans un connecteur en raison de la standardisation de leurs liaisons H, SY, POS, MR, ME et LCP.

Chacune des quatre unités possibles d'un récepteur multifréquence comporte une voie temporelle individuelle sur la liaison de réception MR de la liaison multiplexe LM, telle LMn, à laquelle le récepteur est relié, ce qui permet le traitement simultané des octets de signalisation multifréquences émanant de quatre appelants distincts, les quatre autres voies temporelles réservées au récepteur n'étant pas exploitées.

Deux voies temporelles sont partagées entre les quatre unités sur la liaison temporelle d'émission ME pour l'envoi vers le processeur 5 des chiffres, ces derniers sont codés chacun sur quatre bits et sont successivement obtenus par conversion du code multifréquence en code binaire par l'agencement de traitement 34 d'une unité, cet agencement étant un convertisseur de code usuel connu en soi.

Les signaux multifréquence de numérotation, transmis sur une voie temporelle du circuit de ligne d'abonné 35 d'un poste appelant jusqu'à une unité de récepteur multifréquence via la mémoire de commutation 17, sont successivement émis chiffre par chiffre vers le processeur 5, via la mémoire de commutation 17 et sous forme de quartets successifs sur une voie temporelle. Ils sont ici regroupés avec les quartets correspondants à d'une autre unité de récepteur multifréquence, active ou non.

De même que précédemment, le processeur 5 vient lire la mémoire de commutation 17 via l'interface 20 à l'adresse correspondant à la signalisation qu'elle attend, celle-ci regroupant ici deux quartets relatifs à deux appels différents dont l'un peut être fictif. C'est au niveau du multiplexeur 23 qu'est décidé sous le contrôle du processeur 5 le transfert ou non des octets sortants de la mémoire de commutation 17 vers le démultiplexeur de sortie 19 pour transmission ou non, les octets destinés spécifiquement au processeur 5 n'étant bien entendu pas transmis à travers ce démultiplexeur de sortie.

Le processeur 5 a accès direct dans la mémoire de comutation 17 aux informations de signalisation émanant des joncteurs 6 évoqués ci-dessus. Il en est de même pour les informations de signalisation qui émanent des joncteurs 7 desservant des liaisons de raccordement à d'autres autocommutateurs, lorsque ces liaisons sont de type ligne réseau analogique, les joncteurs 7 ne se différencient alors pratiquement pas des joncteurs 6, seule leur interface de rattachement 9 est spécifiquement adaptée pour l'échange des signalisations par changement d'états ou multifréquences spécifiques à ce type de ligne. De ce fait cette interface 9 et le joncteur 7 qui la comporte ne sont pas décrits plus avant dans la mesure où ils ne comportent pas d'éléments originaux par rapport à ce qui est décrit ici ou à ce qui fait partie de la technique connue de l'homme de l'art.

Comme indiqué plus haut, toutes les informations échangées entre joncteurs 6 ou 7 et entre joncteurs 6 ou 7 et équipements auxiliaires 31, transitent par la mémoire commutation 17 qui sert aussi à l'émission des commandes d'état que le processeur 5 vient y inscrire pour envoi vers chacun.

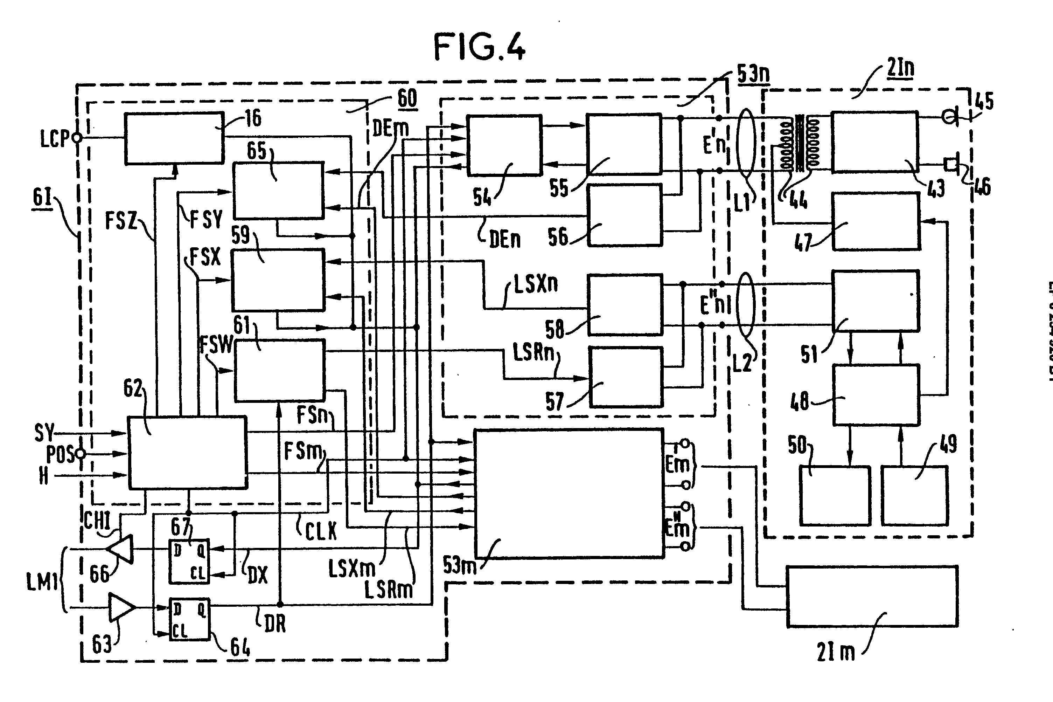

Le joncteur 6l présenté figure 4 est destiné à desservir des appareils de télécommunication 2 pour lesquels des données doivent être échangées sous forme série entre l'autocommutateur 1 et l'appareil par une ligne supplémentaire parallèle à l'usuelle ligne téléphonique, ceci étant par exemple le cas avec des postes d'intercommunication et notamment ceux à afficheur, un tel poste étant schématisé sous la référence 2ln.

Dans le poste d'intercommunication 2In, une paire L2 de fils téléphoniques destinés à la transmission de données en asynchrone et sous forme série est associée à la paire L1 de fils téléphoniques destinés à la transmission des signaux commutés constituant les communications échangées par l'intermédiaire de l'autocommutateur 1.

Le pose 2In comporte à cet effet un circuit audio 43 relié par l'intermédiare d'un transformateur 44 à la ligne L1 et reliant à cette ligne au moins un microphone 45 et un écouteur 46 de manière connue. Ce circuit audio reçoit classiquement des signaux de parole sous forme analogique ou éventuellement de données transcodées pour être transmissibles par la ligne comme des signaux de parole analogiques.

Dans la réalisation présentée, le primaire du transformateur 44 auquel sont reliés les fils de la linge L1 est susceptible d'être soumis à un signal en courant DE appliqué par l'intermédiaire d'un générateur de courant non figuré d'un circuit 47 permettant d'appeler le processeur 5 de l'autocommutateur 1 à des fins d'établissement ou de modification d'une communication.

Le circuit 47 d'appel de processeur est contrôlé par l'unité de commande 48 du poste 2In classiquement organisée autour d'un microprocesseur auquel sont associées des mémoires, selon une structure classique non développée ici. L'unité de commande 48 contrôle classiquement au moins un clavier 49 permettant l'exploitation du poste 2In par les utilisateurs et éventuellement un afficheur 50 permettant la communication de messages, le plus souvent alphanumériques aux utilisateurs.

Dans la réalisation présentée, l'unité de commande 48 appelle le processeur 5 de l'autocommutateur par envoi d'un signal en courant "DE" sur la ligne L1 par l'intermédiaire du circuit 47 d'appel. Le processeur 5 répond à l'unité de commande 48 d'un poste d'intercommunication 2I demandeur par l'intermédiaire de la liaison série constituée par la ligne L2 qui est connectée à une interface émettrice réceptrice 51 convertissant sous forme parallèle les données reçues en série via cette ligne afin de les transmettre à l'unité de commande 48, cette interface effectue la conversion inverse pour les données émises par l'unité de commande 48 vers le processeur 5.

Dans la forme de réalisation présentée, le poste d'intercommunication est téléalimenté, via la ligne L2, par le joncteur 6I auquel il est raccordé. Cette ligne aboutit en ce but sur un circuit d'alimentation non figuré, ce circuit d'alimentation est placé en parallèle à l'interface émettrice-réceptrice 51 dans le poste.

Le joncteur 6I auquel est raccordé le poste 2In est susceptible de desservir plusieurs postes d'intercommunications identiques tels ici 2In et 2Im, le nombre de postes étant ici limités à quatre par joncteur d'intercommunication 6I, chacun de ces postes aboutissant à un équipement individuel d'intercommunication 53, tels les équipements 53m et 53n.

Chaque équipement d'intercommunication, tel 53n comporte un codec ou cofidec 54 en série avec un circuit de passage deux fils-quatre fils 55 les deux bornes globalement référencées E'n de ce dernier sont connectés à la ligne L1 qui transmet les signaux analogiques basse fréquence des communications et le signal en courant DE. Un circuit détecteur 56 surveille l'apparition du signal en courant DE lorsque celui-ci est émis par le poste 2In; il est relié en ce but aux deux bornes E'n.

La téléalimentation du poste 2In est assuré par l'équipement d'intercommunication 53 par un circuit non figuré raccordé aux deux bornes référencées E"n, un classique circuit de protection de joncteur non figuré protège ce dernier contre les surtensions susceptibles de survenir par l'intermédiaire des lignes L1 et L2.

La ligne L2 est de plus connectée en parallèle à un premier circuit transmetteur 57, ici dit de joncteur, chargé de convertir les signaux reçus du processeur 5, via le réseau de commutation 4 et une unité réceptrice 61 en signaux différentiels à allure carrée transmissibles par la ligne L2 ainsi qu'à un second transmetteur 58, dit de poste, apte à convertir les signaux différentiels à allure carrée transmis par le poste via la ligne L2 en impulsions rectangulaires unipolaires.

Les impulsions compatibles MIC émises par les circuits transmetteurs 58 des équipements d'intercommunication d'un joncteur d'intercommunication 6I sont rassemblées dans une unité émettrice 59 d'un circuit intégré commun 60, à laquelle ces circuits émetteurs sont reliés par des liaisons individuelles LSX, telle LSXn.

L'unité émettrice 59 assure l'échantillonnage des signaux reçus des circuits transmetteurs de poste 58 et leur codage sous forme d'octets compatibles MIC ainsi que l'émission desdits octets au cours des intervalles de temps "j+4" à "j+7" affectés au joncteur qui la comporte.

Le circuit commun 60, qui est semblable au circuit de terminaux 42, comporte également une unité réceptrice 61 relié par des liaisons individuelles LSR, telle LSRn, aux circuits transmetteurs de joncteur 57 appartenant au joncteur d'intercommunication qui le comporte, ceci pour récupérer les octets apparaissant au cours des intervalles de temps "j+4" à "j+7" affectés à ce joncteur en vue de l'envoi des informations qu'ils contiennent vers les postes d'intercommunication après conversion.

L'unité réceptrice 61 est contrôlée dans ses distributions d'impulsions par un circuit d'horloge 62 analogue au circuit d'horloge 38 et recevant comme ce dernier les signaux d'horloge H et de synchronisation SY ainsi que les indications POS lui permettant de savoir quels sont les intervalles de temps de voie qui sont affectés au joncteur d'intercommunication qui le comporte sur la liaison multiplexe temporelle LM, telle LM1, auquel est relié ce joncteur. L'unité réceptrice 61 est reliée à la liaison unidirectionnelle de réception DR de la liaison LM1, via un amplificateur d'entrée 63 et une bascule de mise à l'heure 64, présente mais non représentée pour le joncteur de terminaux montré en figure 2.

L'unité émettrice 59 est contrôlée dans ses émissions par le circuit d'horloge 62, via une liaison FSX lui indiquant les intervalles de temps d'émission des impulsions compatibles MIC pour les différents équipements d'intercommunications du joncteur, de même que l'unité réceptrice est contrôlée par le circuit d'horloge 62 via une liaison FSW.

L'unité émettrice 59 est reliée par sa sortie à la liaison unidirectionnelle d'émission DX de la liaison multiplex temporelle LM1, en parallèle avec les codecs 54 des équipements d'intercommunication du joncteur, l'agencement d'identification 16 de ce joncteur et un circuit collecteur de signaux d'appel 65 recevant les indications d'appel émanant des circuits d'extraction 56 du joncteur. Un amplificateur de sortie 66 placé en aval d'une bascule de mise à l'heure 67 reçoit les signaux MIC ou compatibles MIC respectivement émis d'une part par les codecs 54 des équipements d'intercommunication du joncteur, d'autre part par l'agencement d'identification, le circuit collecteur de signaux d'appel et l'unité émettrice, il les transmet sur la liaison unidirectionnelle d'émission de la liaison multiplex temporelle LM1 vers le réseau de commutation 4, en l'absence de commande de mise à l'état haute impédance de sa sortie par le circuit d'horloge 62 via la liaison CHI, lorsque ladite liaison est temporellement affectée à un autre joncteur.

L'agencement d'identification 16 et le circuit collecteur de signaux d'appel 65 sont sélectivement activés sous le contrôle du circuit d'horloge 62 via les liaisons FSZ et FSY, le premier d'entre eux recevant une information d'identification "Icp" codé par câblage et fourni par la liaison LCP, qui ici comporte quatre fils correspondant à quatre bits d'information et précisant le type du joncteur et son niveau d'équipement.

La figure 5 permet de préciser le fonctionnement d'un joncteur d'intercommunication, tel que 6I, en liaison avec les autres parties de l'autocommutateur, ce joncteur disposant à demeure de huit voies temporelles sur la liaison multiplex temporelle LM1 qui le relie au réseau de commutation 4 de l'autocommutateur 1 qui le comporte.

Ces huit voies temporelles correspondent aux huit intervalles de temps référencés "j" à "j+7" sur la figure 5. Chacun des intervalles de temps référencés "j" à "j+3" correspond à deux voies temporelles de sens inverse réservées aux octets "fsa" à "fsd" transitant par les codecs 54 des équipements d'intercommunications 53 du joncteur considéré, chacun de ces intervalles de temps étant affecté à un codec différent par exemple en fonction de la position dans le joncteur de l'équipement d'intercommunication comportant ce codec.

Les octets "fsa" à "fsd" correspondent à des échantillons sonores codés MIC ou à des données mises sous une forme ayant permis leur codage MIC.

Les intervalles de temps référencés "j+4" à "j+7" sont partagés tant sur la liaison d'émission DX que sur la liaison de réception DR.

La voie temporelle correspondant au dernier intervalle de temps "j+7" sur la liaison d'émission DX est partagée en deux demi-voies dont la première est réservée à l'émission d'un quartet d'identification comprenant les quatre bits d'identification "Icp" et dont la seconde est réservée à l'émission des quartets "Is1" correspondant aux données numériques transmises par l'un des circuits d'émission 58 du joncteur.

De manière analogue la voie temporelle correspondant à l'intervalle de temps "j+7" sur la liaison temporelle de réception DR est partagé en deux demi-voies dont l'une, ici la seconde est réservée à la réception des quartets "Is1" correspondant aux données numériques transmises à destination du circuit de réception 57 appartenant au même équipement d'intercommunication que le circuit d'émission 58 considéré ci-dessus.

De manière également analogue, les secondes demi-voies des voies temporelles correspondant aux intervalles de temps "j+4" à "j+6" sont affectées aux quartets "Is4, Is3, Is2" correspondant aux données numériques transmises soit par les circuits transmetteurs de poste 58 soit par les circuits transmetteurs de joncteur 57 des trois autres équipements d'intercommunication 53 possibles du joncteur 6I.

La première demi-voie de la voie temporelle correspondant à l'intervalle de temps "j+6" sur la voie d'émission est réservée à un quartet "de" émanant du circuit d'extraction 56 du joncteur, les quatre bits référencés "n" à "n+1" de ce quartet traduisent chacun à l'état présent du signal en courant DE d'un des postes d'intercommunications 2I connectés au joncteur 6I.

Dans la réalisation présentée, l'unité de commande 48 de chacun des postes d'intercommunications 2I agit sur le circuit d'appel 47 qui la comporte pour demander à communiquer avec le processeur 5 de l'autocommutateur 1.

Cette demande se traduit par une modification de l'état binaire du bit, tel "de1", affecté à l'équipement d'intercommunication desservant le poste d'où émane ladite demande, dans le quartet "de" émis sur la liaison d'émission DX au cours de l'intervalle de temps "j+6" qui suit la détection de cette modification par le circuit détecteur 56 du joncteur concerné.

Ce quartet "de" vient s'écrire en mémoire de commutation 17 à l'adresse correspondant à la voie temporelle qui le transmet, il est donc à disposition du processeur 5 qui comme on l'a vu à un accès direct en lecture à la mémoire de commutation.

Le processeur 5 a donc la possibilité de prendre simultanément connaissance des demandes d'accès émanant des postes d'intercommunications 2I desservis par le même joncteur 6I dans un délai correspondant au plus à la durée d'une trame.

A réception d'une demande d'accès par un poste d'intercommunication 2I, le processeur 5 établit un chemin entre l'équipement d'intercommunication 53 desservant ce poste et un des circuits émetteurs-récepteurs universels asynchrones 29 dont il dispose et ce via le circuit de liaison 30 desservant ce circuit émetteur-récepteur, la liaison multiplexe temporelle LMm à laquelle est connecté le circuit de liaison, le réseau de connexion 4 et la liaison multiplex temporelle LM1 connectée à l'équipement d'intercommunication considéré.

L'unité de commande 48 envoie des données numériques du poste d'intercommunication 2I concerné qu'il veut transmettre sous forme d'un message composé ici en succession d'un élément binaire, dit de départ, toujours identique, de huit éléments binaires correspondant aux données à transmettre, d'un élément binaire de parité et de deux éléments binaires de fin de message à une vitesse correspondant par exemple à 9600 bauds.

Le message reçu au niveau du circuit transmetteur de poste 58 est converti puis transmis vers l'unité émettrice 59 qui l'échantillonne de manière à assurer sa transmission, via un canal qui correspond à une demi-voie temporelle, dont le débit est donc de trente deux kilobits par seconde.

Les octets, correspondant à la conversion du message et associant chacun un quartet de message à un quartet non significatif, sont émis au cours de trames successives, le nombre de trames étant par exemple de quatre par message.

Les octets successifs correspondants à un même message, par exemple de signalisation, sont successivement transmis, via le réseau de connexion 4, vers le circuit de liaison 30 choisi pour eux par le processeur 5.

Le circuit de liaison 30 assure la reconstitution du message par une opération inverse de celle effectuée par l'unité émettrice 59 cette opération inverse d'effectuant sous le contrôle de l'horloge 26, il élimine aussi l'élément binaire de départ, les deux éléments binaires de fin, ainsi que celui de parité après utilisation de ce dernier à des fins de vérification. La transmission des messages au processeur 5 s'effectue octet par octet.

En sens inverse, les envois du processeur 5 à destination d'un poste d'intercommunication 2I, sont transmis via le bus 21 vers un circuit émetteur-récepteur universel asynchrone 29 qui les reçoit sous forme parallèle et qui constitue un train série de données à destination du circuit de liaison 30 auquel ledit circuit émetteur-récepteur est relié.

Le circuit de liaison 30 assure la formation de messages de constitution identique à celle de ceux émis par les unités émettrices 59 et l'échantillonnage de ces messages en vue de leur transmission sous forme d'octets successifs par l'intermédiaire d'une voie temporelle, chaque octet comprenant un quartet de données et un quartet non significatif.

Le processeur 5 établit préalablement un chemin entre le circuit de liaison 30 concerné et l'unité réceptrice 61 du joncteur d'intercommunication 6I concerné, via la liaison multiplex temporelle LMm, le réseau de commutation 4 et la liaison multiplex temporelle LM1 dans l'exemple proposé.

Le circuit de liaison 30 reconstitue le message à partir des octets reçus sous le contrôle du circuit d'horloge 62 du joncteur.

Le message reconstitué est alors transmis au circuit transmetteur de joncteur 57 qui le convertit de manière à permettre sa transmission sous forme de signaux différentiels via la ligne L1, à destination du poste d'intercommunication 2I concerné. Dans ce dernier le message transmis sous forme de signaux différentiels est à nouveau reconverti sous forme d'impulsions binaires unipolaires par l'interface émettrice-réceptrice. Le déchiffrage des messages reçus par un poste d'intercommunication 2I est assuré par le processeur de l'unité de commande 48 du poste qui élimine les éléments binaires de départ, de fin et de parité après exploitation pour ne conserver que les données émanant réellement du processeur 5 soit à des fins d'exploitation personnelles, soit à des fins de transmission à l'organe destinataire, par exemple l'afficheur 50.

Bien entendu d'autres joncteurs 6 ou 7 et divers équipements auxiliaires 31 peuvent êtres associés aux joncteurs et équipements décrits ci-dessus dans l'autocommutateur 1 proposé; une adaptation étant faite dans chaque cas à partir des procédés et moyens proposés ici.

## Revendications

1. Système de rattachement d'abonnés téléphoniques organisé autour d'un autocommutateur temporel numérique (1) qui est commandé par un processeur central (5), qui est synchronisé par une horloge centrale (26), qui comporte un réseau de connexion (4) composé par une matrice de commutation temporelle (17), ainsi que des joncteurs (6, 7) reliés d'une part au réseau de connexion par des liaison multiplex temporelles (LM0 à LMn), d'autre part soit à des appareils de télécommunication (2), éventuellement divers, par lesquels les abonnés sont rattachés à l'autocommutateur, via des lignes (L) appropriées, pour communiquer entre eux, soit éventuellement à d'autres autocommutateurs (1A, 1B), ces joncteurs étant spécifiquement adaptés en fonction des appareils de télécommunication (2) ou équipements d'autocommutateur (1A, 1B) auxquels ils sont reliés et ledit système étant caractérisé en ce que les différents joncteurs sont identiquement reliés au réseau de connexion, chacun disposant d'un même nombre de voies temporelles, sur l'une des liaisons multiplex temporelles, par lesquelles transite l'intégralité des informations le concernant de manière que ces informations soient systématiquement connectées soit vers un autre joncteur, soit vers le processeur central (5), ce dernier disposant d'un accès direct à la mémoire de commutation (17) dans laquelle il est susceptible de venir directement lire et écrire, ainsi que d'au moins un accès par un circuit émetteur-récepteur universel asynchrone (29) relié comme un joncteur à une liaison multiplex temporelle (LMm) via un circuit de liaison (30) assurant bidirectionnellement la conversion et l'émission des signaux entre liaison multiplex temporelle et circuit émetteur-récepteur universel asynchrone concernés.

2. Système de rattachement d'abonnés selon la revendication 1, caractérisé en ce que les voies temporelles attribués à un joncteur sur la liaison temporelle qui le relie au réseau de connexion (4) sont fixement répartis dans chaque sens de transmission à raison d'une voie temporelle par appareil de télécommunication (2) affecté au joncteur pour les informations de type signaux de parole, de données ou de signalisation, à échanger, via le réseau de connexion (4), avec au moins un autre joncteur dans le cadre des communications et à raison d'au moins une partie de voie temporelle par appareil pour les informations de type signalisation, à échanger avec le processeur central (5), et en ce qu'une voie temporelle de même rang dans la suite des voies temporelles affectées à chaque joncteur est affectée, au moins en partie, à l'émission au cours de chaque trame par ce joncteur d'une information d'identification destinée au processeur central et permettant à ce dernier de connaître le type et le niveau d'équipement du joncteur.

3. Système de rattachement d'abonnés selon la revendication 2, caractérisé en ce que les demandes (de, da, db) des appareils de télécommunication (2) connecté à un même joncteur, qui sont destinées au processeur central (5) sont regroupées dans une même voie temporelle fixement attribuée, de manière à être simultanément émises par le joncteur et simultanément prises en compte par le processeur central.

4. Système de rattachement d'abonnés selon la revendication 2, dans lequel les joncteurs (6) auxquels sont reliés les appareils de télécommunication (2) de type postes ou terminaux, comportent des codeurs-décodeurs (36, 54) associés à des circuits de passage deux fils - quatre fils (37, 55) pour convertir, sous forme de signaux MIC, les signaux de parole, de données ou de signalisation, émis sous forme analogique basse fréquence par les appareils de télécommunications (2) en vue de leur communication à partir d'un joncteur, ainsi que la conversion inverse des signaux MIC en signaux analogiques vers les postes, caractérisé en ce que les joncteurs comportent aussi deux unités collectrices communes (40, 59, 41, 61), une par sens de transmission, pour les signalisations échangées entre les appareils de télécommunication et le processeur central, les dites unités collectrices assurant l'émission et la réception, dans les voies temporelles concernées, des dites signalisations échangées avec le processeur central, les dites signalisations étant générées soit par ce processeur central, soit par les appareils de télécommunication 2 eux-mêmes et n'étant que converties par les joncteurs.

5. Système de rattachement d'abonnés selon la revendication 2 caractérisé en ce que la signalisation entre au moins certains appareils de télécommunication (2I) et le processeur central (5) est échangée, via le réseau de connexion, sous forme de messages comportant chacun au moins un bit de départ et deux bits de fin entourant une information de signalisation à transmettre, caractérisé en ce que les dits messages sont respectivement échantillonnés en sortie d'un circuit émetteur-récepteur universel asynchrone (29) placé en aval du processeur central (5) et dans le joncteur (6I) auquel sont connectés les dits appareils de télécommunications (2I) en vue d'être transmis via le réseau de connexion (4) sous forme d'octets compatible avec les octets MIC, la vitesse de transmission desdits messages étant fonction des appareils de télécommunication (2I) et des lignes reliant ces appareils à leur joncteur (6I) de rattachement.

6. Système de rattachement d'abonnés selon la revendication 5, dans lequel au moins certains appareils de télécommunication (2I) échangent leur signalisation sous forme de messages avec le processeur central, via le réseau de connexion, et où ces appareils (2I) comportent chacun une unité de commande (48) organisée autour d'un microprocesseur, caractérisé en ce que les messages sont constitués et reçus au niveau des appareils (2I) par le microprocesseur de chaque unité de commande (48) agissant comme un circuit émetteur-récepteur universel asynchrone et au niveau du processeur central via au moins un circuit émetteur-récepteur universel-asynchrone (29) partagé.

7. Système de rattachement d'abonnés selon la revendication 2 à appareils de télécommunication (2I) reliés à un joncteur (6I) chacun par deux lignes téléphoniques permettant la transmission simultanée de signaux de parole et/ou de données à commuter sur une ligne ainsi que d'une signalisation sous forme de données numériques sur l'autre, caractérisé en ce que les voies temporelles attribuées au joncteur (6I) sur la liaison multiplex temporelle (LM1) qui le relie au réseau de connexion (4) sont fixement réparties dans chaque sens de transmission à raison d'une voie temporelle complète pour appareil de télécommunications (2I) affecté au joncteur pour les informations de type signaux de parole, de données ou de signalisation, à échanger via le réseau de connexion (4) avec au moins un autre joncteur dans le cadre des communications, ainsi qu'à raison d'une voie temporelle incomplète par appareil de télécommunication (2I) affecté au joncteur, pour la signalisation échangée sous forme de données numériques avec le processeur central (5), une partie de deux voies temporelles incomplètement utilisées pour un appareil de télécommunication étant réservée à chaque trame l'une pour les demandes "de" des dits appareils de télécommunications à destination du processeur central (5), l'autre pour l'envoi de l'information d'identification du joncteur vers ce processeur central.

8. Système de rattachement d'abonnés selon les revendications 4 et 7, caractérisé en ce que les appareils de télécommunication (2I), reliés à un joncteur (2I) par deux lignes téléphoniques bifilaires, qui sont notamment du type poste d'intercommunication, sont reliés chacun par une première de ces lignes d'une part à un codeur-décodeur individuel (54) du joncteur pour la transmission de signaux de parole, ou de données, ou de signalisation sous forme analogique basse fréquence et d'autre part à un circuit détecteur de courant (57) signalant les demandes "de" dudit appareil à destination du processeur central (5) et chacun par la seconde de ces lignes, d'une part à un circuit de téléalimentation d'autre part à la liaison multiplex temporelle (LM1) desservant le joncteur, via deux unités collectrices communes (59, 61) et deux circuits transmetteurs (57, 58) affectés à l'appareil dans le joncteur et assurant respectivement l'un, la conversion en signaux impulsionnels unipolaires, des signaux différentiels émis par le poste pour sa signification, et l'autre la conversion inverse pour l'autre sens de transmission.

9. Système de rattachement d'abonnés selon la revendication 1, caractérisé en ce que le nombre de voie temporelles réservées à un joncteur sur la liaison multiplex temporelle que le relie au réseau de connexion est un sous-multiple du nombre de voies temporelles totales offertes par cette liaison, la position des voies temporelles affectées à un joncteur sur une liaison multiplex temporelle étant fonction de la position géographique de son raccordement en fond de panier à cette jonction par rapport aux autres joncteurs avec lesquels il la partage.

## Patentansprüche

1. Anschlußsystem für Fernmeldeteilnehmer, das um eine digitale Zeitmultiplexvermittlung (1) herum eingerichtet ist, die von einer Zentraleinheit (5) gesteuert wird, die durch einen zentralen Taktgeber (26) synchronisiert wird, die ein Vermittlungsnetz (4) aufweist, welches aus einer Zeitmultiplexmatrix (17) besteht, und die Verbindungssätze (6, 7) aufweist, welche einerseits über Zeitmultiplexverbindungen (LMO bis LMn) mit dem Vermittlungsnetz, andererseits entweder mit Fernmeldeapparaten (2), möglicherweise unterschiedlicher Art, verbunden sind, durch die die Teilnehmer über geeignete Leitungen (L) an die automatische Vermittlung angeschlossen sind, um miteinander in Verbindung zu treten, oder aber auch an weitere automatische Vermittlungen (1A, 1B) angeschlossen sind, wobei die Verbindungssätze speziell an die Fernmeldeapparate (2) bzw. die Vermittlungen (1A, 1B) angepaßt sind, mit denen sie verbunden sind, dadurch gekennzeichnet, daß die verschiedenen Verbindungssätze in identischer Weise an das Verbindungsnetz angeschlossen sind, wobei jeder Satz auf einer der Zeitmultiplexverbindungen, über die die Gesamtheit der den Satz betreffenden Informationen übertragen wird, über die gleiche Anzahl von Zeitschlitzen verfügt, derart, daß diese Informationen entweder an einen anderen Verbindungssatz oder an die Zentraleinheit (5) geschaltet werden, wobei letztere sowohl einen direkten Zugriff auf den Vermittlungsspeicher (17) hat, den sie direkt auslesen und beschreiben kann, als auch mindestens einen Zugriff über eine asynchrone Universal-Sende-Empfangsschaltung (29), die wie ein Verbindungssatz über eine Verbindungsschaltung (30) an eine Zeitmultiplexverbindung (LMn) angeschlossen ist und in beiden Richtungen die Umwandlung und die Aussendung der Signale zwischen der Zeitmultiplexverbindung und der asynchronen Universal-Sende-Empfangsschaltung durchführt.

2. Teilnehmeranschlußsystem nach Anspruch 1, dadurch gekennzeichnet, daß für die über das Vermittlungsnetz (4) mit mindestens einem anderen Verbindungssatz im Rahmen der Ferngespräche auszutauschenden Informationen vom Typ der Sprach-, Daten-oder Signalisationssignale die Zeitschlitze, die einem Verbindungssatz in der Zeitmultiplexverbindung zugewiesen sind, welche den Satz mit dem Vermittlungsnetz (4) verbindet, in jeder Übertragungsrichtung mit je einem Zeitschlitz pro Fernmeldeapparat (2), das dem Satz zugewiesen ist, und mit mindestens einem Teil eines Zeitschlitzes je Gerät für die mit der Zentraleinheit (5) auszutauschenden Informationen vom Signalisationstyp fest zugeteilt sind, und daß in der Folge der jedem Verbindungssatz zugewiesenen Zeitschlitze ein Zeitschlitz des gleichen Ranges mindestens anteilig dem Aussenden einer Identifikationsinformation durch diesen Verbindungssatz während jedes Zeitrahmens zugeteilt ist, die für die Zentraleinheit bestimmt ist und letzterem die Erkennung des Typs und der Rangstufe des Verbindungssatzes in der Einrichtung ermöglichen.

3. Teilnehmeranschlußsystem nach Anspruch 2, dadurch gekennzeichnet, daß die Anfragen (de, da, db) der an denselben Verbindungssatz angeschlossenen Fernmeldeapparate (2), die sich an die Zentraleinheit (5) richten, in einem gemeinsamen fest zugeteilten Zeitschlitz gruppiert sind, so daß sie gleichzeitig durch den Verbindungssatz ausgesandt und gleichzeitig durch die Zentraleinheit gleichzeitig berücksichtigt werden.

4. Teilnehmeranschlußsystem nach Anspruch 2, bei dem die Verbindungssätze (6), mit denen die Fernmeldeapparate (2) vom Typ des Fernsprechapparats oder der Datenendstation verbunden sind, Rodierer-Dekodierer (36, 54) aufweisen, die Zweidraht-Vierdraht-Übergangsschaltungen (37, 55) zugeordnet sind, um die Sprach-, Daten- oder Signalisationssignale, die von den Fernmeldeapparaten zur Übermittlung durch einen Verbindungssatz analog im Niederfrequenzbereich ausgesandt werden, in PCM-Signale umzuwandeln, und um die umgekehrte Umwandlung der PCM-Signale in Analogsignale für die Fernsprechapparate durchzuführen, dadurch gekennzeichnet, daß die Verbindungssätze außerdem zwei gemeinsame Sammeleinheiten (40, 59, 41, 61), nämlich eine je Übertragungsrichtung, für die zwischen den Fernmeldeapparaten und der Zentraleinheit ausgetauschten Signalisationssignale aufweisen, wobei die Sammeleinheiten zum Senden und Empfangen der mit der Zentraleinheit ausgetauschten Signalisationssignale in den betroffenen Zeitschlitzen dienen und die Signalisationssignale entweder durch die Zentraleinheit oder durch die Fernmeldeapparate (2) selber erzeugt und durch die Verbindungssätze nur umgewandelt werden.

5. Teilnehmeranschlußsystem nach Anspruch 2, dadurch gekennzeichnet, daß die Signalisation zwischen mindestens bestimmten Fernmeldeapparate (21) und der Zentraleinheit (5) über das Vermittlungsnetz in Form von Nachrichten ausgetauscht wird, die je mindestens ein Anfangsbit und zwei Schlußbits aufweisen, welche die zu übertragende Signalisationsinformation umgrenzen, dadurch gekennzeichnet, daß diese Nachrichten jeweils am Ausgang einer asynchronen Universal-Sende-Empfangsschaltung (29) abgetastet werden, die hinter der Zentraleinheit (5) und im Verbindungssatz (61) liegt, an den diese Fernmeldeapparate (21) angeschlossen sind, um dann über das Vermittlungsnetz (4) als Oktette übertragen zu werden, die mit den PCM-Oktetten kompatibel sind, wobei die Übertragungsgeschwindigkeit der Nachrichten von den Fernmeldeapparaten (21) und den die Apparate mit ihrem Anschlußverbindungssatz (61) verbindenden Leitungen abhängt.

6. Teilnehmeranschlußsystem nach Anspruch 5, bei dem mindestens bestimmte Fernmeldeapparate (21) ihre Nachricht über das Vermittlungsnetz in Form von Nachrichten mit der Zentraleinheit austauschen und bei dem diese Apparate (21) je eine Steuereinheit (48) aufweisen, die um einen Mikroprozessor herum eingerichtet ist, dadurch gekennzeichnet, daß die Nachrichten in Höhe der Apparate (21) durch den Mikroprozessor jeder Steuereinheit (48), die als eine asynchrone Universal-Sende-Empfangs-Schaltung arbeitet, und in Höhe der Zentraleinheit über mindestens eine anteilige asynchrone Universal-Sende-Empfangs-Schaltung (29) gebildet und empfangen werden.

7. Teilnehmeranschlußsystem nach Anspruch 2, mit Fernmeldeapparaten (21), die an einen Verbindungssatz (61) je über zwei Telefonleitungen angeschlossen sind, welche die gleichzeitige Übertragung von durchzuschaltenden Sprach- und/oder Datensignalen über die eine Leitung als auch von Signalisationssignalen in Form von digitalen Daten über die anderen Leitung ermöglichen, dadurch gekennzeichnet, daß für die über das Vermittlungsnetz (4) mit mindetens einem anderen Verbindungssatz im Rahmen der Fernverbindung auszutauschenden Informationen vom Typ der Sprach-, Daten- oder Signalisationssignale die Zeitschlitze, die dem Verbindungssatz (61) in der Zeitmultiplexverbindung (LM1) zugewiesen sind, welche den Satz mit dem Vermittlungsnetz (4) verbindet, in jeder Übertragungsrichtung fest zugeteilt sind, un dzwar ein vollstängier Zeitschlitz pro Fernmeldeapparat (21), der dem Satz zugewiesen ist, sowie für die in Form digitaler Daten mit der Zentraleinheit (5) auszutauschenden Signalisationssignale, wobei ein Teil von zwei für einen Fernmeldeapparat unvollständig genutzten Zeitschlitzen pro Fernmeldeapparat in jedem Zeitrahmen für die an die Zentraleinheit (5) gerichteten Anfragen "de" der Fernmeldeapparate und der andere Teil für die Übermittlung der Identifikationsinformation des Verbindungssatzes zur Zentraleinheit reserviert ist.

8. Teilnehmeranschlußsystem nach den Ansprüchen 4 und 7, dadurch gekennzeichnet, daß die Fernmeldeapparate (21), die durch zwei Zweidrahttelefonleitungen mit einem Verbindungssatz (21) verbunden sind, und die insbesondere dem Zwischenverbindungsapparatetyp angehören, je durch eine erste dieser Leitungen einerseits an einen individuellen Kodierer-Dekodierer (54) des Verbindungssatzes zur Übertragung von analogen Sprachoder Daten-, oder Signalisationssignalen im Niederfrequenzbereich, und andererseits an einen Stromerfassungskreis (57) angeschlossen sind, der die an die Zentraleinheit (5) gerichteten Anfragen "de" des Fernmeldeapparats meldet, und je durch die zweite dieser Leitungen einerseits an einen Fernspeisungskreis, und andererseits über zwei gemeinsame Sammeleinheiten (59, 61) sowie zwei Sendekreise (57, 58) an die den Verbindungssatz beliefernde Zeitmultiplexverbindung (LM1) angeschlossen sind, wobei die Sendekreise im Verbindungssatz dem betreffenden Fernmeldeapparat zugewiesen sind und der eine Sendekreis die Umwandlung der von dem Teilnehmerapparat für seine Signalisierung ausgesandten Differenzsignale in unipolare Impulssignale und der andere die umgekehrte Umwandlung für die andere Übertragungsrichtung durchführt.

9. Teilnehmeranschlußsystem nach Anspruch 1, dadurch gekennzeichnet, daß die Anzahl der Zeitschlitze, die für einen Verbindungssatz auf der Zeitmultiplexverbindung, welche der Satz mit dem Vermittlungsnetz verbindet, reserviert sind, ein Untervielfaches der Gesamtzahl der für diese Verbindung bereitgestellten Zeitschlitze ist, wobei die Position der einem Verbindungssatz auf einer Zeitmultiplexverbindung zugewiesenen Zeitschlitze von der geographischen Position seines Anschlusses am Boden des Einschubs zu dieser Verbindung relativ zu anderen Verbindungssätzen, mit denen er die Verbindung teilt.

**Claims**

1. A system of connecting telephone subscribers based on a digital time-division multiplex switch (1) which is controled by a central processor (5), which is synchronized by a central clock (26), which comprises a switching network (4) consisting of a time-division switching matrix (17) and junctors (6,7) connected to the switching network by time-division multiplex links (LMO through LMn) and either to telecommunication devices (2), possibly of a diverse kind, by which the subscribers are connected to the switch via appropriate lines (L) to communicate with each other, or to other switches (1A, 1B), these junctors being specifically adapted according to the telecommunications devices (2) or switch equipment (1A, 1B) to which they are connected and said system being characterized in that the various junctors are connected to the switching network in the identical same way, each having the same number of time-division channels on one of the time-division multiplex links carrying all of the information concerning it in such a way that this information is systematically switched to another junctor or to the central processor (5), the latter having direct access to the switching memory (17) which it can read and write directly, and at least one access via a universal asynchronous receiver-transmitter circuit (29) connected in the same way as a junctor to a time-division multiplex link (LMm) via a link circuit (30) handling bidirectional conversion and transmission of signals between the time-division multiplex link and the universal asynchronous receiver-transmitter circuit concerned.

2. A subscriber connection system according to claim 1, characterized in that the time-division channels assigned to a junctor on the time-division link which connects it to the switching network (4) are fixedly distributed in each transmission direction at the rate of one time-division channel per telecommunication device (2) assigned to the junctor for voice signal, data or signaling type information to be exchanged via the switching network (4) with at least one other junctor in the framework of calls and at the rate of at least one part time-division channel per device for signaling type information to be exchanged with the central processor (5), and in that a time-division channel of the same rank in the sequence of time-division channels assigned to each junctor is assigned, at least in part, to transmission during each frame by this junctor of identification information to the central processor enabling the latter to find out the type and equipment level of the junctor.

3. A subscriber connection system according to claim 2, characterized in that requests (de, da, db) from telecommunication devices (2) connected to the same junctor and addressed to the central processor (5) are grouped in the same time-division channel on fixed assignment so as to be simultaneously transmitted by the junctor and simultaneously recognized by the central processor.

4. A subscriber connection system according to claim 2, wherein the junctors (6) to which the station or terminal type telecommunication devices (2) are connected comprise coders-decoders (36, 54) associated with two-wire/four-wire converter circuits (37, 55) for converting into PCM signal form voice, data or signaling signals sent in low-frequency analog form by the telecommunication devices (2) for the purpose of their communication from a junctor and also the reverse conversion of PCM signals into analog signals to the stations, characterized in that the junctors further comprise two common collector units (40, 59, 41, 61), one per transmission direction, for signaling exchanged between the telecommunication devices and the central processor, said collector units handling transmission and reception in the time-division channels concerned of said signaling exchanged with the central processor, said signaling being generated either by the central processor or by the telecommunication devices (2) themselves and being only converted by the junctors.

5. A subscriber connection system according to claim 2, characterized in that signaling between at least certain telecommunication devices (21) and the central processor (5) is exchanged via the switching network in the form of messages each comprising at least one start bit and two end bits surrounding the signaling information to be transmitted, characterized in that said messages are respectively sampled at the output of a universal asynchronous receiver-transmitter circuit (29) situated on the output side of the central processor (5) and in the junctor (61) to which said telecommunication devices (21) are connected in order to be transmitted via the switching network (4) in the form of bytes compatible with the PCM bytes, the transmission speed of said messages depending on the telecommunication devices (21) and the lines connecting these devices to their junctor (61).

6. A subscriber connection system according to claim 5, wherein at least certain telecommunication devices (21) exchange signaling in the form of messages with the central processor via the switching network and where these devices (21) each comprise a microprocessor-based control unit (48), characterized in that the messages are constituted and received at the level of the devices (21) by the microprocessor of each control unit (48) operating as a universal asynchronous receiver-transmitter circuit and at the level of the central processor via at least one shared universal asynchronous receiver-transmitter circuit (29).

7. A subscriber connection system according to claim 2, with telecommunication devices (21) each connected to a junctor (61) by two telephone lines enabling simultaneous transmission of voice and/or data signals to be switched on one line and signaling in the form of digital data on the other, characterized in that the time-division channels assigned to the junctor (61) on the time-division multiplex link (LM1) which connects it to the switching network (4) are fixedly distributed in each transmission direction at the rate of one complete time-division channel per telecommunication device (21) assigned to the junctor for the voice, data or signaling type signals to be exchanged via the switching network (4) with at least one other junctor in the framework of communications as well as one incomplete time-division channel per telecommunication device (21) assigned to the junctor for signaling exchanged in the form of digital data with the central processor (5), part of two time-division channels incompletely used for a telecommunication device being reserved to each frame, one for requests ("de") from said telecommunication device to the central processor (5) and the other for sending junctor identification information to the central processor.

8. A subscriber connection system according to claims 4 and 7, characterized in that the telecommunication devices (21) connected to a junctor (21) by two two-wire telephone lines, which are of the intercom station type in particular, are each connected by a first of these lines on the one hand to an individual coder-decoder (54) of the junctor for transmission of voice or data or signaling signals in low-frequency analog form and on the other hand to a current detector circuit (57) signaling the requests ("de") from said device addressed to the central processor (5) and by the second of these lines on the one hand to a remote power feed circuit and on the other hand to the time-division multiplex link (LM1) serving the junctor via two common collector units (59, 61) and two transmitter circuits (57, 58) assigned to the devices in the junctor and respectively handling the conversion into unipolar pulse signals of the differential signals sent as signaling by the station and the inverse conversion for the other transmission direction.

9. A subscriber connection system according to claim 1, characterized in that the number of time-division channels reserved to a junctor on the time-division multiplex link that connects it to the switching network is a sub-multiple of the total number of time-division channels provided by this link, the position of the time-division channels assigned to a junctor on a time-division multiplex link depending on the geographic position of its connection on the backplane to this interface relative to the other junctors with which it shares it.

FIG.1

FIG.2

EP 0 254 920 B1

FIG.3

TR

IT: i-1 | i | i+1 | i+2 | i+3 | i+4 | i+5 | i+6 | i+7 | i+8

JTA

DR: fsa | fsb | fsc | fsd | cet4 | cet3 | cet2 | cet1

DX: fsa | fsb | fsc | fsd | oet | lcp

D: ap | ct1 | ct2 | csb | da4 | da3 | da2 | da1 | db4 | db3 | db2 | db1

EB: k | k+1 | k+2 | k+3 | k+4 | k+5 | k+6 | k+7 | m | m+1 | m+2 | m+3 | m+4 | m+5 | m+6 | m+7

FIG.5

IT: j | j+1 | j+2 | j+3 | j+4 | j+5 | j+6 | j+7

JTI

DR: fsa | fsb | fsc | fsd | ls4 | ls3 | ls2 | ls1

DX: fsa | fsb | fsc | fsd | ls4 | ls3 | de | ls2 | lcp | ls1

D: de4 | de3 | de2 | de1 | ls2

EB: n | n+1 | n+2 | n+3 | n+4 | n+5 | n+6 | n+7

# FIG.4

EP 0 254 920 B1